# EUROPEAN PATENT SPECIFICATION

(11) **EP 4 104 957 B1**
(45) Date of publication and mention of the grant of the patent: **15.05.2024**
(21) Application number: 21814616.5
(22) Date of filing: 07.04.2021
(51) Int. Cl.: B22F 3/16, C22C 1/05, C22C 14/00, C22C 19/03, C22C 19/07, C22C 29/08, B22F 3/10, B22F 5/00

(54) **CUTTING TOOL**
SCHNEIDWERKZEUG
OUTIL DE COUPE

(30) Priority: 26.05.2020 JP 2020091490
(43) Date of publication of application: 21.12.2022
(73) Proprietor: SUMITOMO ELECTRIC INDUSTRIES, LTD., Osaka-shi, Osaka 541-0041 (JP)
(72) Inventor: YAMANISHI, Takato, Osaka-shi, Osaka 541-0041 (JP); TSUDA, Keiichi, Osaka-shi, Osaka 541-0041 (JP)
(74) Representative: Boult Wade Tennant LLP
(86) International application number: PCT/JP2021/014766
(87) International publication number: WO 2021/241021

(56) References cited:
- WO-A1-2006/112221
- WO-A1-2019/065678
- WO-A1-2019/138599
- CN-A- 110 042 294
- JP-A- 2002 205 207
- JP-A- 2003 113 438
- JP-A- 2007 223 001
- JP-A- 2012 066 336
- JP-A- 2015 024 468
- JP-A- 2019 063 932

## Description

### TECHNICAL FIELD

The present disclosure relates to a cutting tool. The present application claims a priority based on Japanese Patent Application No. 2020-091490, filed on May 26, 2020.

### BACKGROUND ART

In recent years, titanium alloys have been widely used in various application such as parts of aircrafts, and the needs for processing have increased. The titanium alloy has excellent characteristics as a structure material, but thus difficult to process. In particular, chipping derived from wearing and adhesion at high temperature is likely to be a problem. Many attempts of art are made to improve a tool lifetime by regulating the tool surface made of cemented carbide, but no attempt has sufficiently satisfied the needs for processing the titanium alloy.

Although the target is not the titanium alloy, PTL 1 (Japanese Patent Laying-Open No. 2003-1505), for example, disclose art relating to: a tool material in which the performance is attempted to improve by applying a high compressive stress to WC present in a surface layer part of a cemented carbide; and a tool material with inhibited chipping derived from adhesion with the titanium alloy by embedding an oxide into the surface JP 2019 063932 A, WO 2019/065678 A1 and JP 2012 066336 A relate to a cutting tool comprising a cemented carbide, wherein 1.0 GPa or more of a compressive residual stress is applied to the hard phase of the surface layer of said cemented carbide.

### CITATION LIST

### PATENT LITERATURE

PTL 1: Japanese Patent Laying-Open No. 2003-1505

### SUMMARY OF INVENTION

A cutting tool according to an aspect of the present invention is made of a cemented carbide including a first hard phase and a binder phase.

The first hard phase is composed of WC particles.

The binder phase contains at least one element selected from Co and Ni.

The cutting tool comprises: a main body part; and a surface layer part provided on a surface of the main body part.

On a surface of a plain part in a rake face of the cutting tool, 1.0 GPa or more of a compressive residual stress is applied to the first hard phase.

A thickness of the surface layer part is equal to or less than an average particle diameter of the first hard phase on the surface of the plain part in the rake face.

A ratio (B/A) of the average particle diameter (B) of the first hard phase on the surface of the plain part in the rake face to an average particle diameter (A) of the first hard phase on a cross section of the main body part is 0.7 or more and less than 1.

### BRIEF DESCRIPTION OF DRAWINGS

Fig. 1 is a cross-sectional schematic view of a cutting tool according to an embodiment.
Fig. 2 is a conceptual view for describing a surface layer part of a cutting tool according to an embodiment.
Fig. 3 is an enlarged cross-sectional view of a conventional cutting tool.
Fig. 4 is an enlarged cross-sectional view of another conventional cutting tool.
Fig. 5 is an example of an SEM image of a surface (surface of a plain part in a rake face) of a cutting tool.
Fig. 6 is an SEM image of a surface of a cutting tool of Example 1.
Fig. 7 is an SEM image of a surface of a cutting tool of Comparative Example 101.

### DETAILED DESCRIPTION

### [Problem to be Solved by the Present Invention]

The titanium alloy is likely to adhere to an edge of a cutting tool due to its high reactivity, and easily causes chipping or reaction wearing on the tool edge with repeated formation and removal of the adhesion.

Since the adhesion is significantly affected by a shape and surface state of the tool edge, attempts to regulate a composition and structure of the cutting tool surface have been made to reduce the adhesion itself or to improve resistance against chipping. In processing the titanium alloy, however, commonly used covering techniques of the cutting tool hardly exhibit the effect, and further improvement in the tool lifetime satisfying the market requirement has been required.

In particular, with cutting under high-speed conditions growing in demand in recent years, a temperature of the interface between the tool and the workpiece material is likely to rise, and damage expansion of the cutting tool due to the reaction wearing becomes a serious problem.

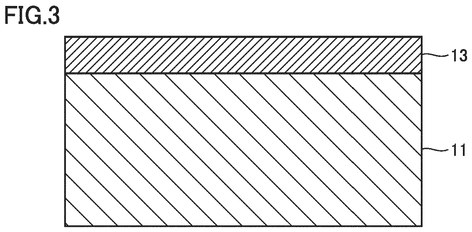

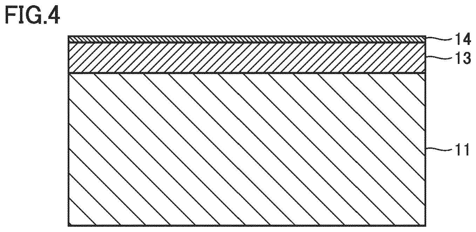

Formation of a surface layer 13 having a predetermined thickness on a cutting tool 1 (see Figs. 3 and 4) causes deterioration in characteristics having a trade-off relationship with the characteristic to be improved (wearing resistance) such as, for example, increasing hardness decreases toughness. Thus, it is undesired to improve the wearing resistance against the titanium alloy with a method for forming surface layer 13 having a predetermined thickness.

Therefore, an object of the present invention is to provide a cutting tool having high wearing resistance against the titanium alloy.

### [Advantageous Effect of the Present Invention]

The above can provide the cutting tool having high wearing resistance against the titanium alloy.

### [Description of Embodiments]

First, embodiments of the present invention will be listed and described.

It is to be noted that a description of a form "A to B" herein means an upper and lower limits of a range (that is, A or more and B or less). When A has no description of unit and only B has a description of unit, a unit of A and a unit of B are same.
[1] A cutting tool according to an aspect of the present invention is made of a cemented carbide including a first hard phase and a binder phase.

The first hard phase is composed of WC particles.

The binder phase contains at least one element selected from Co and Ni.

The cutting tool comprises: a main body part; and a surface layer part provided on a surface of the main body part.

On a surface of a plain part in a rake face of the cutting tool, 1.0 GPa or more of a compressive residual stress is applied to the first hard phase.

A thickness of the surface layer part is equal to or less than an average particle diameter of the first hard phase on the surface of the plain part in the rake face.

A ratio (B/A) of the average particle diameter (B) of the first hard phase on the surface of the plain part in the rake face to an average particle diameter (A) of the first hard phase on a cross section of the main body part is 0.7 or more and less than 1.

In the present invention, since sufficient compressive residual stress is applied to the surface (rake face) of the cutting tool and crushing of the first hard phase (WC particle) is inhibited, the wearing resistance of the cutting tool can be improved. Therefore, the cutting tool has high wearing resistance against the titanium alloy. Accordingly, the cutting tool can have a longer lifetime when used for cutting the titanium alloy and the like.

[2] The cemented carbide preferably further includes a second hard phase. The second hard phase is composed of: a compound between at least one element selected from the group consisting of periodic table groups 4 and 5 elements and at least one element selected from the group consisting of C, N, O, and B; or a solid solution thereof.

When the cemented carbide constituting the cutting tool includes the second hard phase, it is expected to improve characteristics of the cutting tool such as heat resistance.

[3] The cutting tool may further comprise a coating film on at least a part of a surface.

Comprising the coating film further improves the wearing resistance and the like of the cutting tool, and the cutting tool can have a further longer lifetime.

### [Detail of Embodiment of the Present Invention]

Hereinafter, an embodiment of the present invention (hereinafter, referred to as "the present embodiment") will be described. The invention is defined in the appended claims.

When a compound is represented by a chemical formula herein, the atomic ratio may be any conventionally known atomic ratios unless otherwise particularly limited, and is not necessarily limited to an atomic ratio within a stoichiometric range.

### <Cutting Tool>

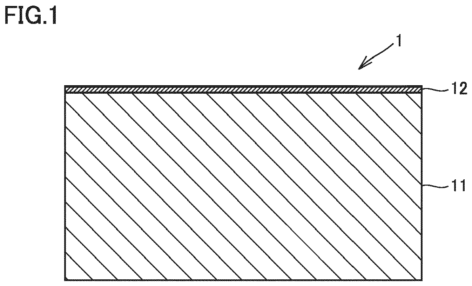

With referring to Fig. 1, a cutting tool 1 of the present embodiment is made of a cemented carbide including a first hard phase and a binder phase. The first hard phase is composed of WC particles. The binder phase contains at least one element selected from Co and Ni.

Cutting tool 1 comprises: a main body part 11; and a surface layer part 12 provided on a surface of main body part 11.

On a surface of a plain part in a rake face of cutting tool 1, 1.0 GPa or more of a compressive residual stress is applied to a first hard phase 121.

A thickness of surface layer part 12 is equal to or less than an average particle diameter of first hard phase 121 on the surface of the plain part in the rake face.

A ratio (B/A) of the average particle diameter (B) of the first hard phase on the surface of the plain part in the rake face to an average particle diameter (A) of the first hard phase on a cross section of the main body part is 0.7 or more and less than 1.

### (Main Body Part and Surface Layer Part)

With referring to Fig. 1, cutting tool 1 comprises: main body part 11; and surface layer part 12 provided on the surface of main body part 11.

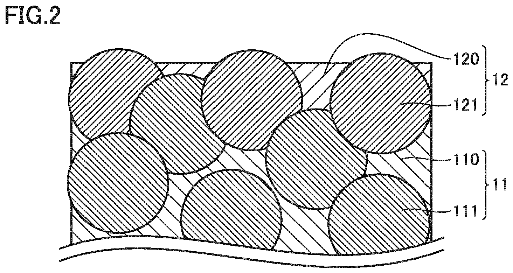

With referring to Fig. 2, main body part 11 is constituted with a binder phase 110, a first hard phase (WC particle) 111, and the like.

Although surface layer part 12 is constituted with binder phase 120, first hard phase (WC particle) 121, and the like, a proportion of the binder phase differs from that in main body part 11.

A thickness of surface layer part 12 is equal to or less than an average particle diameter of first hard phase 121 on the surface of the plain part in the rake face.

The thickness of surface layer part 12 can be measured with the following method.

Using an SEM with, for example, a magnification of 3000 to 5000 and an observation field of 18 µm × 25 µm, a predetermined cross section of the cutting tool is continuously measured from the surface side to inner side of the cutting tool along a predetermined line extending in the thickness direction of the above cutting tool, and measured is a distance in the thickness direction from the surface of the cutting tool to a point immediately before an observation field where an area proportion of the binder phase firstly falls below 0.05. Then, the same measurements are performed at random three positions in the cutting tool, and an average value of the measured distances is specified as the thickness of surface layer part 12.

In the present embodiment, on a surface of the plain part in the rake face of the cutting tool, 1.0 GPa or more of a compressive residual stress is applied to the first hard phase.

A ratio (B/A) of the average particle diameter (B) of the first hard phase on the surface of the plain part in the rake face of the cutting tool to an average particle diameter (A) of the first hard phase on a cross section of the main body part of the cutting tool is 0.7 or more and less than 1. The cross section of the main body part is any cross section of main body part 11. When the average particle diameter (A) of the first hard phase satisfies the above requirement on any one cross section of main body part 11, the effect of the present invention can be obtained. As long as the present inventors have made experiment, it has been found that a selection of the cross section of main body part 11 does not affect the effect of the present invention (the same effect can be obtained with a different cross section of main body part 11).

In the present embodiment, 1.0 GPa or more of the compressive residual stress is applied to the first hard phase (WC particle) on the surface (rake face) of the cutting tool with a blast treatment and the like, and the average particle diameter of the first hard phase on the surface of the cutting tool is maintained to be 0.7 times or more than the average particle diameter of the first hard phase in the inner part (main body part).

In conventional art, applying the compressive residual stress with blasting and the like causes crushing of the first hard phase (WC particle) on the surface (rake face), and significantly reduces the average particle diameter of the first hard phase on the surface compared with that in the main body part. The reduction of the average particle diameter has the same mean as increase in the surface area. A larger surface area increases an adhesion area, and the surface (rake face) of the cutting tool is likely to react with a workpiece material. Thus, damage due to the reaction between the cutting tool and the workpiece material, which becomes a problem in processing the titanium alloy, is unfortunately enhanced. Meanwhile, the sufficient compressive residual stress cannot be applied under such blast treatment conditions that the WC particle is not crushed, and damage due to chipping (a break due to removal of the WC particle and growth of a crack generated inside the tool) and the like is likely to proceed.

In contrast, in the present embodiment, the sufficient compressive residual stress is applied to the surface (rake face) of the cutting tool. Since the damage due to chipping on the surface of the cutting tool can be inhibited and the crushing of the first hard phase (WC particle) can be inhibited even under blasting conditions that can apply the sufficient compressive residual stress, the wearing derived from the reaction between the titanium alloy (workpiece material) and the rake face of the cutting tool associated with the increase in the surface area (of rake face) of the cutting tool due to crushing of the first hard phase can be inhibited.

Accordingly, the cutting tool of the present embodiment can achieve a longer lifetime of the cutting tool particularly when used for cutting the titanium alloy, which causes a problem of damage due to the high reactivity. The cutting tool of the present embodiment exhibits the advantage particularly under a cutting environment at relatively high speed, which is likely to proceed the damage due to the reaction.

Since the first hard phase (WC particle) in the surface layer part is mashed when the compressive residual stress is applied to the cutting tool with the blast treatment and the like, the B/A is typically less than 1.

Even in a case where the B/A is 0.7 or more, when another layer having a different composition and the like from the surface layer part or the main body part is present between the surface layer part, the main body part, and the like, the wearing resistance of the cutting tool may be deteriorated by increase in spread wearing or adhesion. Therefore, another layer having a different composition and the like from the surface layer part and the main body part is preferably absent between the surface layer part, the main body part, and the like.

The average particle diameter (B) of the first hard phase on the surface of the plain part in the rake face of the cutting tool is an average particle diameter of the first hard phase viewed from a direction perpendicular to the surface of the cutting tool (the normal line direction of the surface).

The average particle diameter (A) of the first hard phase on the cross section of the main body part of the cutting tool is an average particle diameter of the first hard phase in a plain image (two-dimensional image) viewed from a direction perpendicular to any cross section of the cutting tool (the normal line direction of the cross section). Here, the cross section (cross section perpendicular to the surface) of the main body part is a part of the cross section of the cutting tool excluding a cross section of the surface layer part (a range from the surface of the cutting tool to a depth same as the average particle diameter of the first hard phase on the surface of the plain part in the rake face).

The average particle diameters (A and B) of the first hard phase on the above surface, cross section (plain image), or the like herein are Heywood diameter calculated with a method using an image analysis software described in "<Evaluation Method for Properties of Cutting Tool>".

In the present embodiment, the structure of the main body part is preferably uniform. When the structure of the main body part is uniform, a region that can be clearly separated other than the surface layer part is absent in the main body part, which is a part other than a region having a boundary to the outside of the cutting tool (surface layer part), when any cross section of the cutting tool is observed with an SEM.

### (First Hard Phase)

The first hard phase is composed of the WC particles.

The average particle diameter of the first hard phase on the cross section of the main body part of the cutting tool is preferably 0.1 to 5.0 µm, and more preferably 0.5 to 3.0 µm. Within this range, a dense cemented carbide having a sufficient hardness can be easily obtained.

### (Binder phase)

The binder phase contains at least one element selected from Co and Ni. The binder phase may further contain another element within a range that can obtain the effect of the present invention.

### (Second Hard Phase)

The cemented carbide preferably further contains the second hard phase. The second hard phase is composed of: a compound between at least one element selected from the group consisting of periodic table groups 4 and 5 elements and at least one element selected from the group consisting of C, N, O, and B; or a solid solution thereof. Containing the second hard phase can impart effects to the cutting tool such as improvements in oxidation resistance and reaction resistance, and inhibition of cracking due to impact to the cutting tool.

Examples of the at least one element selected from the group consisting of periodic table groups 4 and 5 elements include titanium (Ti), zirconium (Zr), hafnium (Hf), vanadium (V), niobium (Nb), and tantalum (Ta). Examples of the compound include TiC, NbC, TaC, ZrC, ZrCN, VC, TaNbC, TiN, and TiCN.

The average particle diameter of the second hard phase is preferably 0.1 to 3.0 µm, and more preferably 0.2 to 0.5 µm. In this case, a dense cemented carbide can be easily obtained.

The above first hard phase, second hard phase, and binder phase are preferably contained in a state where the first hard phase and the second hard phase are dispersed in the binder phase. This state improves wearing resistance of the cutting tool at high temperature. The first hard phase, the second hard phase, and the binder phase are more preferably contained in the cemented carbide in a uniformly dispersed state. Here, the uniformly dispersed state is referred to a state where the first hard phase (and the second hard phase) and the binder phase are contacted each other, and are present in the cemented carbide with relatively few contacts between the same phases.

The cemented carbide may contain components other than the above. For example, the cemented carbide may contain an inevitable impurity (such as B, N, and O) within a range not impairing the effect of the invention. In this case, for example, the cemented carbide is composed of the first hard phase (or the first hard phase and the second hard phase), the binder phase, and the inevitable impurity. The cemented carbide may contain free carbon and an irregular layer called a η-phase in the structure.

The cutting tool according to the present embodiment can be widely used as a cutting tool for various uses, and can form a flat cut surface on the surface of the workpiece material in a long time. In particular, the cutting tool according to the present embodiment can be preferably used as a cutting tool for cutting a workpiece material containing the titanium alloy.

### <Evaluation Method for Properties of Cutting Tool>

The average particle diameter of the first hard phase on the surface (surface of the plain part in the rake face) and on cross section of the cutting tool can be determined with, for example, the following method.

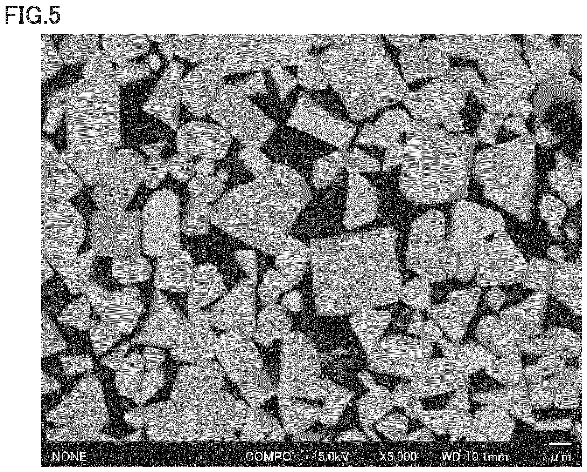

The surface of the plain part in the rake face of the cutting tool or any cross section of the cutting tool obtained by using a focused ion beam apparatus, cross section polisher apparatus, and the like are photographed with an SEM (Scanning Electron Microscope) from a direction perpendicular to the surface or the cross section with a magnification of 5000 to obtain electron images of any 10 or more numbers of observation fields (for example, 10 observation fields) (see Fig. 5). Then, an attached EPMA (Electron Probe Micro-Analysis) or EDX (Energy Dispersive X-ray spectrometry) is used to perform an elemental mapping on a predetermined area (12 µm × 9 µm) in each electron image.

The plain part in the rake face of the cutting tool referred to herein is a part where a concave part of a chip breaker is not formed in the rake face, and is any part in a region sandwiched between: a boundary between a honing region of a tip (edge ridgeline linking the rake face and the flank face) and the plain part; and an imaginary line A passing through a point distanced at 5 mm from the boundary in a direction opposite to the tip. The "surface of the plain part in the rake face of the cutting tool" is a part corresponding to the rake face of the cutting tool in the surface of surface layer part 12 of the above cutting tool (surface opposite to main body part 11).

Based on the obtained elemental mapping, a particle containing WC is specified as the first hard phase, and a phase containing no WC and containing at least one of Co and Ni is specified as the binder phase. A particle containing no WC and containing: at least one of predetermined periodic table groups 4 and 5 elements; and at least one selected from the group consisting of C, N, O, and B is specified as the second hard phase.

By performing image analysis of this SEM image (elemental mapping) using, for example, an image analysis software ("Mac-View I", available from Mountech Co., Ltd.), the average particle diameter (Heywood diameter: an average value of diameters of imaginary circles having the same area as an area of the particle) of the first hard phase on the surface or cross section of the cutting tool can be calculated.

First, on each of the first hard phases (WC particles) in the image, average values of horizontal feret diameters and vertical feret diameter are determined. The average particle diameter of the first hard phase can be determined by summing the average values of both the feret diameters of each WC particle and dividing it by the number of the measured first hard phases. More numbers of the hard phases in the above observation field are prefer, and the number is more preferably 100 or more, and further preferably 200 or more. It is to be noted that the photographing magnification may be changed within a range not impairing the accuracy of the image analysis.

With such analysis, the average particle diameter of the second hard phase and the like can be measured. The analysis can also determine which part contains the hard phase (the first hard phase and the second hard phase) and the binder phase in the cutting tool, and determine a composition of each phase.

### (Measurement of Compressive Residual Stress)

The compressive residual stress in the first hard phase on the surface of the plain part of the cutting tool can be determined by, for example, the 2θ-sin2ψ method (side inclination method) using X-ray. The measurement conditions are as follows. For example, determined is an average value of the compressive residual stress at any three or more positions within 5 mm from the honing position of the rake face of the cutting tool to the central position of the tool.

### (Measurement Conditions)

X-ray output: 10 keV
X-ray source: irradiation light
Measurement surface: (211) plane in the outermost surface of WC
Detector: Flat panel
Condensing size: 140 nm × 230 nm
Scanning axis: 2θ/θ
Scanning mode: CONTINUOUS

### <Manufacture of Cutting Tool>

The cutting tool of the present embodiment can be manufactured with a manufacturing method, described below in detail, including, for example, a mixing step, a molding step, a sintering step, a cooling step, and a processing step. To achieve the characteristic constitution of the cutting tool of the present embodiment, it is important to regulate pressure after appearance of the liquid phase in the sintering step and a cooling rate in the cooling step.

### (Raw Material Powder)

For a raw material powder that constitutes the binder phase, a powder of at least one element selected from Co and Ni is used. For raw material powders that constitute the hard phases, a powder of WC itself that constitutes the first hard phase and a compound and the like themselves that constitute the second hard phase are used. These powders preferably have a Fsss (Fisher Sub-Sieve Sizer) particle diameter of 0.5 to 10 µm. The Fsss particle diameter can be measured by a laser diffraction method and the like.

In the raw material powders that constitute the cemented carbide, a proportion of the WC particle that constitutes the first hard phase is preferably 70 to 95 mass%, and more preferably 85 to 95 mass%.

In the raw material powders that constitute the cemented carbide, a total proportion of Co and Ni that constitute the binder phase is preferably 5 to 15 mass%, and more preferably 5 to 10 mass%.

When the cemented carbide contains a second hard phase, a total proportion of the compounds that constitute the second hard phase in the raw material powders that constitute the cemented carbide is preferably 0 to 15 mass%, and more preferably 0 to 5 mass%.

When the cemented carbide contains the first hard phase, the binder phase, and the second hard phase, in the raw material composition of the cemented carbide at blending, a proportion of WC that constitutes the first hard phase is preferably 70 to 95 mass%, a total proportion of Co and Ni that constitute the binder phase is preferably 5 to 15 mass%, and a total proportion of compounds that constitute the second hard phase is preferably 0 to 15 mass%, from the viewpoint of achievement of sufficient hardness and density for using the cutting tool for the titanium alloy.

In the raw material composition of the cemented carbide at blending, the proportion of WC that constitutes the first hard phase is more preferably 85 to 95 mass%, the total proportion of Co and Ni that constitute the binder phase is more preferably 5 to 10 mass%, and the total proportion of compounds that constitute the second hard phase is more preferably 0 to 5 mass%, from the viewpoint of maintaining a good balance between hardness and toughness of the cemented carbide.

The composition proportion of such raw material powders is reflected to a composition proportion in the finally obtained cutting tool.

### (Mixing Step)

In the mixing step, the above raw material powders are mixed to obtain a mixed powder.

For mixing, an Attritor, a ball mill, a bead mill, a mortar, a jet mill, and the like can be used.

A mixing time is preferably 0.1 to 48 hours, and from the viewpoint of unevenly, uniformly mixing the raw material powders, more preferably 2 to 15 hours.

### (Molding Step)

In the molding step, the mixed powder obtained in the mixing step is poured into a mold for pressing to obtain a press-molded article (cutting tool before sintering).

For the mold, a mold made of a cemented carbide (such as a Ta capsule) can be used, for example. The molding method is not particularly limited as long as it is performed under typical conditions. A pressure in the pressing is preferably 10 MPa to 16 GPa.

### (Sintering Step)

In the sintering step, the press-molded article obtained in the molding step is sintered.

The maximum temperature in the sintering is preferably 1400 to 1600°C. A holding time at the maximum temperature is, for example, 0.5 to 2 hours. These conditions are not particularly limited as long as they are conditions within a typical range that can produce a cemented carbide.

The sintering step is performed under an inert gas atmosphere such as argon gas. Here, regardless of the maximum temperature, the sintering atmosphere is set to a compressed atmosphere at 100 to 400 kPaG from a point exceeding 1350°C during heating (after appearance of the liquid phase).

### (Cooling Step)

In the cooling step, a sintered material after completion of the sintering (cutting tool) is cooled.

In the cooling step, a time for dropping the temperature of the cutting tool from the maximum temperature to 1300°C is preferably 0.2 to 1 hour. A cooling rate in a region lower than 1300°C is not particularly limited.

The cooling step is preferably performed under an inert gas atmosphere such as argon gas. A partial pressure of the atmosphere gas in the cooling step is preferably 400 kPaG or more, and more preferably 400 to 650 kPaG. In particular, the cooling from the maximum temperature performed under the compressed atmosphere at 400 kPaG or more can perform the cooling at a sufficient cooling rate.

### (Processing Step)

In the processing step, performed is a treatment for applying 1.0 GPa or more of a compressive residual stress to the surface (rake face) of the cutting tool. The treatment for applying 1.0 GPa or more of the compressive residual stress can also serve as a honing treatment of the tip of the cutting tool.

Examples of the method for applying the compressive residual stress include a blast treatment. Examples of the blast treatment include wet blasting.

Examples of a material of media (objects to be projected to the tool) used in the blast treatment such as wet blasting include non-metals such as alumina, and steel. Although spheres are commonly used as the media in many cases, the media is not necessarily a true sphere.

The conditions of the blast treatment are not particularly limited as long as they can apply 1.0 GPa or more (preferably 1.0 GPa or more and 2 GPa or less) of the compressive residual stress. For example, when 1.0 GPa or more of the compressive residual stress is applied by wet blasting, a linear distance between a projection port of the media and the surface (rake face) of the cutting tool is 80 to 120 mm, a pressure applied to the media (also referred to as a projection pressure) is 0.1 to 0.3 MPa, a projection time is 10 to 45 seconds, a projection angle with respect to the normal line of the rake face is 30 to 90°, and a diameter of the media is 0.1 to 1.0 mm.

### (Principle)

Hereinafter, a principle that the above manufacturing method achieves the characteristic constitution of the cutting tool of the present embodiment will be described.

Typically in sintering the cemented carbide, the binder phase elements (Co, Ni) become a liquid phase at approximately 1320°C (depending on a contained carbon content) to densify the alloy, and in this time, the liquid phase moves because of a difference in temperature between the inside and surface of the alloy or the atmosphere. As a result, an amount of the binder phase and a particle size of the hard phase vary between the surface and the inside. Thus, in the present embodiment, the sintering step is performed under the predetermined compressed atmosphere at a temperature of the liquid-phase appearing temperature (approximately 1320°C) or more to regulate an amount of the binder phase in the surface layer part of the cutting tool.

In many conventional art, the atmosphere gas is not compressed for a reason other than enhancing the dentification of the alloy, and the atmosphere gas is decompressed to form a layer having a certain function. Under such a decompressed atmosphere, however, the binder phase elements and carbon are likely to volatilize from the cutting tool surface, and an amount of the binder phase on the cutting tool surface is relatively low.

Meanwhile, even under compression, applying an excessive pressure inhibits the move of the liquid phase and carbon to the surface with elemental spread and with flow of the liquid phase, leading to decrease in the amount of the binder phase on the cutting tool surface.

As above, with the low amount of the binder phase on the cutting tool surface, ability of holding the WC particle is insufficient and crushing and removal of the particle are likely to occur during the treatment for applying the compressive stress such as blasting. In this case, the surface area of the cutting tool relatively increases to unfortunately enhance the wearing derived from the reaction between the titanium alloy (workpiece material) and the cutting tool.

In contrast, in the present embodiment, the sintering step is performed under the predetermined compressed atmosphere at a temperature equal to or more than the liquid-phase appearing temperature to appropriately regulate the amount of the binder phase in the surface layer part of the cutting tool. According to this regulation, the crushing and removal of the WC particle on the cutting tool surface can be inhibited when the treatment for applying the compressive stress such as blasting is performed, and the surface area of the cutting tool relatively decreases. Therefore, the wearing derived from the reaction between the titanium alloy (workpiece material) and the cutting tool can be inhibited.

Also, in the present embodiment, rapidly cooling under the compressed atmosphere is performed in the cooling step to allow the WC particle size in the surface layer part of the cutting tool to be uniform, and allow the shape to be near spherical. According to this step, the surface area of the cutting tool relatively decreases. Therefore, the wearing derived from the reaction between the titanium alloy (workpiece material) and the cutting tool can be inhibited.

In the cooling within a region in which the liquid phase appears, a low cooling rate (for example, 10°C/min) causes the size (particle diameter) of the WC particle in the surface layer part of the cutting tool to be ununiform, and causes the shape to be angular. The present inventors have found that the WC particle is likely to be crushed during the treatment for applying the compressive residual stress such as blasting in the surface layer part in which a large number of such WC particles with enhanced granular growth are present, and have found that the crushing of the WC particle can be inhibited by the rapid cooling, which does not proceed the granular growth of the WC particle.

As described above, since the regulation of the pressure in the sintering step and the regulation of the cooling rate in the cooling step relatively decrease the surface area of the cutting tool of the present embodiment, the wearing of the cutting tool derived from the reaction between the titanium alloy (workpiece material) and the cutting tool can be inhibited.

Examples of the cutting tool can include a drill, an endmill, an edge-changeable cutting tip for a drill, an edge-changeable cutting tip for an endmill, an edge-changeable cutting tip for milling, an edge-changeable cutting tip for turning, a metal saw, a gear cutting tool, a reamer, and a tapping tool.

### (Coating Film)

The cutting tool may further comprise a coating film on at least a part of the surface. Comprising the coating film further improves the wearing resistance and the like of the cutting tool to allow the cutting tool to have a longer lifetime. Characteristics of the coating film can also be imparted to the cutting tool.

As the coating film, a coating film having a thermal expansion coefficient of 7×10⁻⁶/K or more and 9×10⁻⁶/K or less is preferably used. As a composition of the coating film, a nitride of one or more elements selected from the group consisting of Ti, Al, Cr, Si, Hf, Zr, Mo, Nb, Ta, V, and W, or carbon nitride is preferable.

In addition, the coating film preferably has an oxidation resistance of 1000°C or more. Here, "having an oxidation resistance of 1000°C or more" means that a temperature at which the coating film is evaluated in the atmosphere with a Thermogravimetry/Differential Thermal Analysis (TG/DTA) apparatus to cause an increase in weight is 1000°C or more. Preferable examples of a composition that constitutes the coating film having such an oxidation resistance include AlTiSiN, AlCrN, TiZrSiN, CrTaN, HfWSiN, and CrAlN.

The coating film as above can be formed with any of a physical vapor deposition (PVD) method and a chemical vapor deposition (CVD) method. When the coating film is formed with the CVD method, the coating film having excellent adhesiveness to the cemented carbide (cutting tool) is likely to be obtained. Examples of the CVD method include a thermal CVD method. When the coating film is formed with the PVD method, the compressive residual stress is applied to be likely to increase the toughness. From the viewpoint of remarkable improvement in the adhesiveness between the coating film and the cemented carbide (cutting tool), a cathode ark-ion plating method can also be used.

The coating film in the cutting tool according to the present embodiment preferably coats a part to be the edge of the cutting tool and the proximity thereof, and may coat the entirety of the cutting tool surface. The coating film may be a single layer, and may be a multilayer. A thickness of the coating film is preferably 1 µm or more and 20 µm or less, and more preferably 1.5 µm or more and 15 µm or less. Example

Hereinafter, the present invention will be described in more detail with Examples, but the present invention is not limited thereto.

### <Examples 1 to 13 and Comparative Examples 101 to 108>

First, using a plurality types of compound powders and metal powders represented by blending composition (WC, NbC, TaC, Co, and Ni) shown in Table 1 as raw material powders, CNMG432-shaped (manufactured by Sumitomo Electric Hardmetal Corp.) throwaway tips (cutting tools) made of cemented carbides according to Examples 1 to 13 and Comparative Examples 101 to 108 were produced in the same manner as the method for manufacturing a cutting tool described in the above embodiment.

In the mixing step, mixing was performed by using an Attritor for 12 hours. A pressing pressure in the molding step was set to 100 MPa. The maximum temperature in the sintering step was set to 1450°C, and a holding time at the maximum temperature was set to 1 hour. An atmosphere gas in the cooling step was argon, and a partial pressure of the atmosphere gas was set to 400 kPaG. An atmosphere pressure in the sintering step and a cooling time in the cooling step (time of dropping the temperature from the maximum temperature to 1300°C) were set to be shown in Table 1.

In the processing step (step of applying 1.0 GPa or more of the compressive residual stress to the rake face of the cutting tool) with wet blasting, a linear distance between a projection port of media and the surface (rake face) of the cutting tool was 100 mm, a pressure applied to the media (projection pressure) was 0.2 MPa, a projection time was 30 seconds, a projection angle with respect to the normal line of the rake face was 45°, and a diameter of the media (spheres made of aluminum) was 1.0 mm. It is to be noted that the projection time in Example 2 was set to 20 seconds, and the projection time in Comparative Example 102 was set to 10 seconds. In only Example 4, 1.0 GPa of the compressive residual stress was applied to the rake face of the cutting tool by setting the projection pressure to 0.10 MPa among the above conditions in the processing step (blast treatment).

On the obtained cutting tool in each Example and Comparative Example, the average particle diameter (A) of the first hard phase on the cross section of the main body part and the average particle diameter (B) of the first hard phase on the surface of the plain part in the rake face were measured with the method described in the above embodiment. Also calculated was the ratio (B/A) of the average particle diameter (B) of the first hard phase on the surface of the plain part in the rake face to the average particle diameter (A) of the first hard phase on the cross section of the main body part. These measurement results are shown in Table 1.

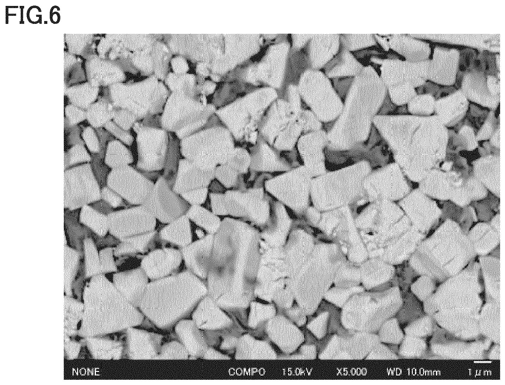

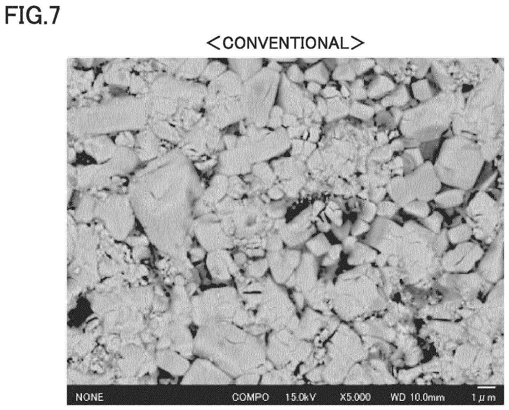

Fig. 6 is an SEM image of the cutting tool surface (surface of the plain part in the rake face) of Example 1, and Fig. 7 is an SEM image of the cutting tool surface of Comparative Example 101. It is found from these images that the mashed first hard phase on the cutting tool surface due to the processing step in Example 1 is fewer than that in Comparative Example 101.

On the cutting tool of each Example and Comparative Example, a thickness of the surface layer part was measured with the method described in the above embodiment. From the measurement results, in Examples 1 to 13 and Comparative Examples 101 to 107, the thickness of the surface layer part was equal to or less than the average particle diameter of the first hard phase (WC particle) on the surface of the plain part in the rake face of the cutting tool. In contrast, in Comparative Example 108, the thickness of the surface layer part was larger than the average particle diameter of the first hard phase (WC particle) on the surface of the plain part in the rake face of the cutting tool. In Comparative Example 108, the surface layer part is relatively thick because of the relatively long cooling time. Table 1 shows the results of the average particle diameters of the first hard phase and the second hard phase measured with the method described in the above embodiment.

### <Evaluation of Wearing Resistance>

On the throwaway tip (cutting tool) obtained in each of the Examples and Comparative Examples, the following evaluation of the wearing resistance was performed.

On each cutting tool, measured was a cutting time in which a wearing amount of the flank face of the edge of the cutting tool reached 0.2 mm in a high-load cutting test (test of wearing resistance) under the following cutting conditions. The measurement results of the cutting time are shown in Table 1. The cutting time shown in Table 1 is an average value on four corners of each cutting tool. A longer cutting time indicates excellent wearing resistance.

### (Cutting conditions)

Workpiece material: Ti alloy (Ti-6Al-4V)
Cutting speed (Vc): 100 m/minute
Depth of cut (ap): 2.0 mm
Feed (f): 0.1 mm/rev
Cutting environment: WET

**[Table 1]**

| | | Blending composition (mass%) | | | | | Sintering conditions | | Average particle diameter of first hard phase (µm) | | B/A | Compressive residual stress of WC on rake face (GPa) | Average particle diameter of second hard phase (µm) | Cutting time (mm) |
|---|---|---|---|---|---|---|---|---|---|---|---|---|---|---|
| | | WC | NbC | TaC | Co | Ni | Atmospher e pressure (kPaG) | Coolin g time (h) | A | B | | | | |
| | | | | | | | | | Cross section of main body part | Surface | | | | |
| Example | 1 | 88.0 | 0.0 | 2.0 | 10.0 | 0.0 | 140.0 | 0.2 | 1.68 | 1.36 | 0.81 | 1.4 | 0.34 | 20 |
| | 2 | 88.0 | 0.0 | 2.0 | 10.0 | 0.0 | 100.0 | 0.2 | 1.65 | 1.22 | 0.74 | 1.3 | 0.33 | 18 |
| | 3 | 88.0 | 0.0 | 2.0 | 10.0 | 0.0 | 400.0 | 0.2 | 1.67 | 1.44 | 0.86 | 1.5 | 0.29 | 20 |
| | 4 | 88.0 | 0.0 | 2.0 | 10.0 | 0.0 | 140.0 | 0.2 | 1.69 | 1.59 | 0.94 | 1.0 | 0.44 | 18 |
| | 5 | 88.0 | 0.0 | 2.0 | 5.0 | 5.0 | 140.0 | 0.2 | 1.88 | 1.59 | 0.85 | 1.4 | 0.38 | 19 |
| | 6 | 88.0 | 0.0 | 2.0 | 0.0 | 10.0 | 140.0 | 0.2 | 1.89 | 1.48 | 0.78 | 1.4 | 0.35 | 18 |
| | 7 | 88.0 | 2.0 | 0.0 | 10.0 | 0.0 | 140.0 | 0.2 | 1.76 | 1.38 | 0.78 | 1.4 | 0.45 | 19 |
| | 8 | 81.0 | 9.0 | 0.0 | 10.0 | 0.0 | 140.0 | 0.2 | 1.66 | 1.43 | 0.86 | 1.4 | - | 16 |
| | 9 | 90.0 | 0.0 | 0.0 | 10.0 | 0.0 | 140.0 | 0.2 | 2.64 | 2.01 | 0.76 | 1.6 | - | 18 |
| | 10 | 88.0 | 0.0 | 0.0 | 12.0 | 0.0 | 140.0 | 0.2 | 2.58 | 2.18 | 0.84 | 1.6 | - | 17 |
| | 11 | 88.0 | 0.0 | 0.0 | 12.0 | 0.0 | 140.0 | 0.2 | 0.98 | 0.73 | 0.74 | 1.4 | - | 17 |
| | 12 | 90.0 | 0.0 | 0.0 | 10.0 | 0.0 | 140.0 | 1.0 | 3.21 | 2.35 | 0.73 | 1.5 | 0.87 | 16 |
| | 13 | 88.0 | 0.0 | 0.0 | 12.0 | 0.0 | 140.0 | 1.0 | 0.48 | 0.40 | 0.83 | 1.6 | - | 16 |
| Comparative Example | 101 | 88.0 | 0.0 | 2.0 | 10.0 | 0.0 | vacuum | 0.2 | 1.65 | 0.77 | 0.47 | 1.4 | 0.35 | 11 |
| | 102 | 88.0 | 0.0 | 2.0 | 10.0 | 0.0 | vacuum | 0.2 | 1.65 | 1.37 | 0.83 | 0.8 | 0.33 | 13 |
| | 103 | 88.0 | 0.0 | 2.0 | 10.0 | 0.0 | 90.0 | 0.2 | 1.68 | 1.05 | 0.63 | 1.4 | 0.34 | 13 |
| | 104 | 88.0 | 0.0 | 2.0 | 10.0 | 0.0 | 450.0 | 0.2 | 1.64 | 0.91 | 0.55 | 1.2 | 0.39 | 13 |
| | 105 | 90.0 | 0.0 | 0.0 | 10.0 | 0.0 | vacuum | 0.2 | 2.54 | 1.54 | 0.61 | 1.3 | - | 10 |
| | 106 | 88.0 | 0.0 | 0.0 | 12.0 | 0.0 | vacuum | 1.0 | 0.98 | 0.51 | 0.52 | 1.5 | - | 10 |
| | 107 | 88.0 | 0.0 | 2.0 | 0.0 | 10.0 | vacuum | 0.2 | 1.84 | 1.11 | 0.60 | 1.6 | - | 12 |
| | 108 | 88.0 | 0.0 | 2.0 | 10.0 | 0.0 | vacuum | 2.5 | 1.99 | 0.54 | 0.27 | 1.1 | 0.41 | 12 |

From the results shown in Table 1, Examples 1 to 13, which meet all the requirements of the cutting tool of the present invention, are found to have a long cutting time and excellent wearing resistance compared with Comparative Examples, which does not meet the requirements of the cutting tool of the present invention.

From the result in Comparative Example 102, it is found that under weaker blasting conditions simply to inhibit the crushing of WC as in the conventional art, the B/A value meets the requirement of the present invention, but 1.0 GPa or more of the compressive residual stress, which meets the requirement of the present invention, is not applied, and thereby the cutting time is not extended.

The embodiments and Examples disclosed herein are examples in every aspect, and should be considered as being nonrestrictive. The scope of the present invention is determined by not the above embodiment but CLAIMS, and intended to include meaning equivalent to CLAIM and all modification within the scope.

### REFERENCE SIGNS LIST

1 cutting tool, 11 main body part, 110 binder phase of main body part, 111 first hard phase of main body part, 12, 14 surface layer part, 120 binder phase of surface layer part, 121 first hard phase of surface layer part, 13 surface layer

## Claims

1. A cutting tool made of a cemented carbide including a first hard phase and a binder phase, wherein
the first hard phase is composed of WC particles,
the binder phase contains at least one element selected from Co and Ni,
the cutting tool comprises: a main body part; and a surface layer part provided on a surface of the main body part,
on a surface of a plain part in a rake face of the cutting tool, 1.0 GPa or more of a compressive residual stress, as measured as described in the description, is applied to the first hard phase,
a thickness of the surface layer part, as measured as described in the description, is equal to or less than an average particle diameter, as measured as described in the description, of the first hard phase on the surface of the plain part in the rake face, and
a ratio of a second average particle diameter that is the average particle diameter of the first hard phase on the surface of the plain part in the rake face to a first average particle diameter that is an average particle diameter of the first hard phase on a cross section of the main body part is 0.7 or more and less than 1.

2. The cutting tool according to claim 1, wherein
the cemented carbide further includes a second hard phase, and
the second hard phase is composed of: a compound between at least one element selected from the group consisting of periodic table groups 4 and 5 elements and at least one element selected from the group consisting of C, N, O, and B; wherein the at least one element selected from the group consisting of periodic table groups 4 and 5 elements includes titanium, zirconium, hafnium, vanadium, niobium, and tantalum, such like TiC, NbC, TaC, ZrC, ZrCN, VC, TaNbC, TiN, and TiCN.

3. The cutting tool according to claim 1 or 2, wherein
the main body part and the surface layer part further include a second hard phase, and
the second hard phase is composed of: a compound between at least one element selected from the group consisting of periodic table groups 4 and 5 elements and at least one element selected from the group consisting of C, N, O, and B; wherein the at least one element selected from the group consisting of periodic table groups 4 and 5 elements includes titanium, zirconium, hafnium, vanadium, niobium, and tantalum, such like TiC, NbC, TaC, ZrC, ZrCN, VC, TaNbC, TiN, and TiCN.

4. The cutting tool according to any one of claims 1 to 3, wherein
the second average particle diameter is an average particle diameter of the first hard phase in a plain image viewed from a direction perpendicular to the surface of the plain part in the rake face of the cutting tool, and
the first average particle diameter is an average particle diameter of the first hard phase in a plain image viewed from a direction perpendicular to the cross section of the main body part, and the cross section of the main body part is a part of any cross section of the cutting tool excluding a cross section of the surface layer part.

5. The cutting tool according to any one of claims 1 to 4, wherein the first average particle diameter is 0.1 µm or more and 5.0 µm or less.

6. The cutting tool according to any one of claims 2 to 3, wherein the first hard phase and the second hard phase are dispersed in the binder phase.

7. The cutting tool according to any one of claims 1 to 6, further comprising a coating film on at least a part of a surface.

## Patentansprüche

1. Schneidwerkzeug aus einem Sinterkarbid mit einer ersten Hartphase und einer Bindephase, wobei
die erste harte Phase aus WC-Teilchen besteht,
die Bindemittelphase mindestens ein Element enthält, das aus Co und Ni ausgewählt ist und
das Schneidwerkzeug umfasst: einen Hauptkörperteil; und einen Oberflächenschichtteil, der auf einer Oberfläche des Hauptkörperteils vorgesehen ist,
auf einer Oberfläche eines glatten Teils in einer Spanfläche des Schneidwerkzeugs eine Druckeigenspannung von 1,0 GPa oder mehr, gemessen wie in der Beschreibung beschrieben, auf die erste Hartphase aufgebracht wird,
eine Dicke des Oberflächenschichtteils, gemessen wie in der Beschreibung beschrieben, gleich oder kleiner als ein durchschnittlicher Teilchendurchmesser, gemessen wie in der Beschreibung beschrieben, der ersten harten Phase auf der Oberfläche des glatten Teils in der Spanfläche ist, und
ein Verhältnis eines zweiten durchschnittlichen Teilchendurchmessers, der der durchschnittliche Teilchendurchmesser der ersten harten Phase auf der Oberfläche des glatten Teils in der Spanfläche ist, zu einem ersten durchschnittlichen Teilchendurchmesser, der ein durchschnittlicher Teilchendurchmesser der ersten harten Phase auf einem Querschnitt des Hauptkörperteils ist, 0,7 oder mehr und weniger als 1 beträgt.

2. Schneidwerkzeug nach Anspruch 1, bei dem
das Sinterkarbid außerdem eine zweite harte Phase enthält, und
die zweite harte Phase besteht aus: einer Verbindung zwischen mindestens einem Element, ausgewählt aus der Gruppe, die aus den Elementen der Gruppen 4 und 5 des Periodensystems besteht, und mindestens einem Element, ausgewählt aus der Gruppe, die aus C, N, O und B besteht;
wobei das mindestens eine Element, das aus der Gruppe ausgewählt ist, die aus den Elementen der Gruppen 4 und 5 des Periodensystems besteht, Titan, Zirkonium, Hafnium, Vanadium, Niob und Tantal umfasst, wie TiC, NbC, TaC, ZrC, ZrCN, VC, TaNbC, TiN und TiCN.

3. Schneidwerkzeug nach Anspruch 1 oder 2, bei dem
der Hauptkörperteil und der Oberflächenschichtteil außerdem eine zweite harte Phase enthalten, und
die zweite harte Phase besteht aus: einer Verbindung zwischen mindestens einem Element, ausgewählt aus der Gruppe, die aus den Elementen der Gruppen 4 und 5 des Periodensystems besteht, und mindestens einem Element, ausgewählt aus der Gruppe, die aus C, N, O und B besteht;
wobei das mindestens eine Element, das aus der Gruppe ausgewählt ist, die aus den Elementen der Gruppen 4 und 5 des Periodensystems besteht, Titan, Zirkonium, Hafnium, Vanadium, Niob und Tantal umfasst, wie TiC, NbC, TaC, ZrC, ZrCN, VC, TaNbC, TiN und TiCN.

4. Schneidwerkzeug nach einem der Ansprüche 1 bis 3, bei dem
der zweite durchschnittliche Teilchendurchmesser ein durchschnittlicher Teilchendurchmesser der ersten harten Phase in einem ebenen Bild ist, das aus einer Richtung senkrecht zu der Oberfläche des ebenen Teils in der Spanfläche des Schneidwerkzeugs betrachtet wird, und
der erste durchschnittliche Teilchendurchmesser ein durchschnittlicher Teilchendurchmesser der ersten Hartphase in einem ebenen Bild ist, das aus einer Richtung senkrecht zu dem Querschnitt des Hauptkörperteils betrachtet wird, und der Querschnitt des Hauptkörperteils ein Teil eines beliebigen Querschnitts des Schneidwerkzeugs mit Ausnahme eines Querschnitts des Oberflächenschichtteils ist.

5. Schneidwerkzeug nach einem der Ansprüche 1 bis 4, bei dem der erste durchschnittliche Teilchendurchmesser 0,1 µm oder mehr und 5,0 µm oder weniger beträgt.

6. Schneidwerkzeug nach einem der Ansprüche 2 bis 3, bei dem die erste harte Phase und die zweite harte Phase in der Bindemittelphase dispergiert sind.

7. Schneidwerkzeug nach einem der Ansprüche 1 bis 6, weiterhin umfassend einen Beschichtungsfilm auf mindestens einem Teil einer Oberfläche.

## Revendications

1. Outil de coupe fait d'un carbure cémenté contenant une première phase dure et une phase de liaison, dans lequel
la première phase dure est composée de particules de WC,
la phase de liaison contient au moins un élément choisi parmi Co et Ni,
l'outil de coupe comprend : une partie de corps principal ; et une partie de couche de surface disposée sur une surface de la partie de corps principal,
sur une surface d'une partie lisse dans une face de coupe de l'outil de coupe, une contrainte résiduelle de compression de 1,0 GPa ou plus, telle que mesurée comme décrit dans la description, est appliquée à la première phase dure,
l'épaisseur de la partie de couche de surface, telle que mesurée comme décrit dans la description, est égale ou inférieure à la granulométrie moyenne, telle que mesurée comme décrit dans la description, de la première phase dure sur la surface de la partie lisse dans la face de coupe, et
le rapport de la deuxième granulométrie moyenne, qui est la granulométrie moyenne de la première phase dure sur la surface de la partie lisse dans la face de coupe, à la première granulométrie moyenne, qui est la granulométrie moyenne de la première phase dure sur une section transversale du corps principal, est de 0,7 ou plus et inférieur à 1.

2. Outil de coupe selon la revendication 1, dans lequel
le carbure cémenté contient en outre une deuxième phase dure, et
la deuxième phase dure est composée de : un composé entre au moins un élément choisi dans l'ensemble constitué par les éléments des Groupes 4 et 5 du Tableau périodique et au moins un élément choisi dans l'ensemble constitué par C, N, O et B ;
dans lequel l'au moins un élément choisi dans l'ensemble constitué par les éléments des Groupes 4 et 5 du Tableau périodique englobe le titane, le zirconium, le hafnium, le vanadium, le niobium, et le tantale, comme TiC, NbC, TaC, ZrC, ZrCN, VC, TaNbC, TiN, et TiCN.

3. Outil de coupe selon la revendication 1 ou 2, dans lequel
la partie de corps principal et la partie de couche de surface contiennent en outre une deuxième phase dure, et
la deuxième phase dure est composée de : un composé entre au moins un élément choisi dans l'ensemble constitué par les éléments des Groupes 4 et 5 du Tableau périodique et au moins un élément choisi dans l'ensemble constitué par C, N, O et B ;
dans lequel l'au moins un élément choisi dans l'ensemble constitué par les éléments des Groupes 4 et 5 du Tableau périodique englobe le titane, le zirconium, le hafnium, le vanadium, le niobium, et le tantale, comme TiC, NbC, TaC, ZrC, ZrCN, VC, TaNbC, TiN, et TiCN.

4. Outil de coupe selon l'une quelconque des revendications 1 à 3, dans lequel
la deuxième granulométrie moyenne est la granulométrie moyenne de la première phase dure dans une image à plat vue depuis une direction perpendiculaire à la surface de la partie lisse dans la face de coupe de l'outil de coupe, et
la première granulométrie moyenne est la granulométrie moyenne de la première phase dure dans une image à plat vue depuis une direction perpendiculaire à la section transversale de la partie de corps principal, et la section transversale de la partie de corps principal est une partie de n'importe quelle section transversale de l'outil de coupe à l'exception d'une section transversale de la partie de couche de surface.

5. Outil de coupe selon l'une quelconque des revendications 1 à 4, dans lequel la première granulométrie moyenne est de 0,1 µm ou plus et 5,0 µm ou moins.

6. Outil de coupe selon l'une quelconque des revendications 2 et 3, dans lequel la première phase dure et la deuxième phase dure sont dispersées dans la phase de liaison.

7. Outil de coupe selon l'une quelconque des revendications 1 à 6, comprenant en outre un film de revêtement sur au moins une partie d'une surface.
